# EUROPÄISCHE PATENTSCHRIFT

(11) **EP 0 629 531 B1**
(45) Veröffentlichungstag und Bekanntmachung des Hinweises auf die Patenterteilung: **23.04.1997**
(21) Anmeldenummer: 94108479.0
(22) Anmeldetag: 01.06.1994
(51) Int. Cl.: B60R 22/46

(54) **Vorrichtung zum pyrotechnischen Drehantrieb einer Wickelwelle eines Sicherheitsgurtaufrollautomaten**
Pyrotechnic driving device for the rotation of an automatic safetybelt retractor spool
Dispositif d'entraînement pyrotechnique en rotation d'une bobine d'enrouleur automatique de ceinture de sécurité

(30) Priorität: 02.06.1993 DE 9308273 U
(43) Veröffentlichungstag der Anmeldung: 21.12.1994
(73) Patentinhaber: HS Technik und Design Technische Entwicklungen GmbH, 82234 Wessling (DE)
(72) Erfinder: Specht, Martin Dipl. Ing.(FH), DE-82340 Feldafing (DE); Krauss, Walter, Dipl. Ing. (FH), DE-80689 München (DE)
(74) Vertreter: Nöth, Heinz, Dipl.-Phys.

(56) Entgegenhaltungen:
- EP-A- 0 059 643
- DE-A- 2 505 625
- DE-A- 3 040 667
- DE-A- 3 220 498
- DE-A- 4 222 993
- GB-A- 1 162 323
- US-A- 3 220 668
- US-A- 3 386 683
- PATENT ABSTRACTS OF JAPAN vol. 13, no. 183 (M-820) (3531) 28. April 1989 & JP-A-01 012 953 (HONDA MOTOR CO LTD) 17. Januar 1989

## Beschreibung

Die Erfindung betrifft eine Vorrichtung nach dem Oberbegriff des Patentanspruches 1.

Bei einer derartigen aus der DE-A-32 20 498 bekannten Vorrichtung erfolgt die Straffung des Sicherheitsgurtes durch einen pyrotechnischen Drehantrieb einer Wickelwelle eines Sicherheitsgurtaufrollautomaten in einem Fahrzeug, wobei der Sicherheitsgurt auf die Wickelwelle aufgerollt wird. Der Strafferantrieb besitzt einen in einem Führungsgehäuse angeordneten Antriebskörper, der durch ein pyrotechnisches Antriebsmittel nach dessen Zündung angetrieben wird. Die Antriebsbewegung wird über ein Zahnrad vom Antriebskörper auf die Wickelwelle übertragen. Als Antriebskörper können beim bekannten Strafferantrieb eine Zahnstange oder Kettenglieder einer vom pyrotechnischen Antriebsmittel angetriebenen Kette zum Einsatz kommen. Durch das Straffen des Sicherheitsgurtes wird bei einem Unfall die Gefahr, daß aufgrund des locker am Körper des Fahrzeuginsassen anliegenden Sicherheitsgurtes oder durch einen Filmspuleffekt in den auf der Wickelwelle aufgewickelten Gurtbandwickellagen eine zu starke Vorverlagerung des Fahrzeuginsassen auftreten kann, vermindert.

Aufgabe der Erfindung ist es, eine Vorrichtung der eingangs genannten Art zu schaffen, bei welcher der Strafferantrieb in kompakter Bauweise mit verlängerter Antriebsstrecke auf die Wickelwelle einwirkt.

Diese Aufgabe wird erfindungsgemäß durch die kennzeichnenden Merkmale des Patentanspruches 1 gelöst.

Vorzugsweise weist die Wickelwelle ein Abtriebsrad, insbesondere Zahnrad, auf, auf das die Antriebskörper ihre Bewegungen übertragen. Dazu kann der jeweilige Antriebskörper eine entsprechende Außenverzahnung aufweisen, oder das Abtriebszahnrad ist in der unprofilierten Oberfläche des Antriebskörpers in selbstschneidendem Eingriff. Das Drehmoment kann vom Abtriebsrad über ein Getriebe, eine Kupplung oder direkt auf die Wickelwelle übertragen werden.

In vorteilhafter Ausbildung verfügt der Antriebskörper über einen Einlauf- oder Zentrierkonus an seiner dem Abtriebszahnrad zugewandten Seite. Damit wird der gegenseitige Einlauf der beiden Verzahnungen erleichtert und synchronisiert.

Vorzugsweise umfaßt das Führungsgehäuse zwei um die Achse der Wickelwelle spiegelbildlich parallel angeordnete Führungsrohre. Damit wird eine kompakte Bauweise bei Verwendung mehrerer Antriebskörper erzielt. Die Auslösung der Antriebskörper kann als Reihenzündung erfolgen. Mehrere Antriebskörper in Kombination haben den Vorteil, daß die Auslösezuverlässigkeit erhöht wird und daß die Drehbewegung und Drehkraft der Wickelwelle verstärkt werden kann.

Die Führungsrohre können geradlinig oder gekrümmt oder zu einer Kreisform gebogen sein.

Als Antriebsmittel für die Antriebskörper kann ein Druckgas, das pyrotechnisch erzeugt wird, verwendet werden.

Die Zündung des jeweiligen pyrotechnischen Treibsatzes (Gasgenerators) kann, beispielsweise durch eine trägheitssensitive Einrichtung veranlaßt, elektrisch erfolgen. Derartige Einrichtungen sind auf dem Gebiet der Gurtstraffertechnik bekannt.

Anhand der Figuren wird an Ausführungsbeispielen die Erfindung noch näher erläutert. Es zeigt:
- Fig. 1:: in schematischer schnittbildlicher Darstellung ein erstes Ausführungsbeispiel, wobei nur ein Führungsrohr gezeigt ist;
- Fig. 2:: ein zweites Ausführungsbeispiel mit doppeltem Führungsrohr;
- Fig. 3:: ein drittes Ausführungsbeispiel mit selbstschneidendem Abtriebszahnrad, wobei nur ein Führungsrohr gezeigtist;
- Fig. 4:: ein viertes Ausführungsbeispiel mit einer druckempfindlichen Zündung für die Zündung des dem zweiten Antriebskörper zugeordneten Treibsatzes;
- Fig. 5:: ein fünftes Ausführungsbeispiel, das ebenfalls eine druckempfindliche Zündung für den Antrieb des zweiten Antriebskörpers aufweist;
- Fig. 6:: ein sechstes Ausführungsbeispiel mit einer gemeinsamen Gasgeneratoreinrichtung für beide Antriebskörper;
- Fig. 7:: ein siebtes Ausführungsbeispiel;
- Fig. 8:: eine Draufsicht auf das in der Fig. 7 dargestellte Ausführungsbeispiel;
- Fig. 9:: ein achtes Ausführungsbeispiel;
- Fig. 10:: ein neuntes Ausführungsbeispiel; und
- Fig. 11:: eine druckempfindliche Zündeinrichtung für einen Gasgenerator; und
- Fig. 12:: ein zehntes Ausführungsbeispiel.

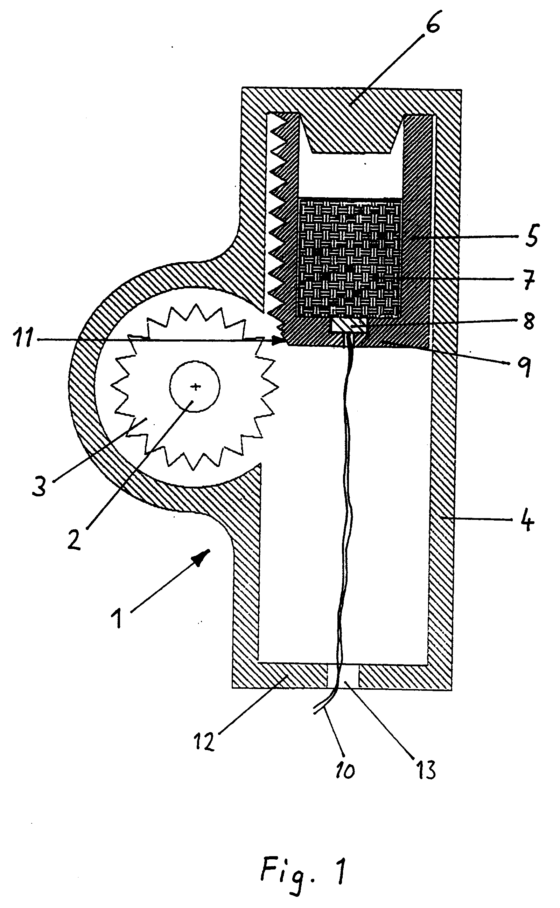

Das in Fig. 1 dargestellte Ausführungsbeispiel einer erfindungsgemäßen Vorrichtung weist ein Führungsgehäuse 1 an einem Sicherheitsgurtaufrollautomaten (nicht dargestellt) auf. Das Führungsgehäuse 1 enthält eine Wickelwelle 2 des Aufrollautomaten mit auf der Wickelwelle 2 angeordnetem als Zahnrad (Abtriebszahnrad) ausgebildetes Abtriebsrad 3. Desweiteren umfaßt das Führungsgehäuse 1 Führungsrohre 4 zur jeweiligen Aufnahme und Führung eines als Kolben ausgebildeten Antriebskörpers 5, von denen nur ein Führungsrohre dargestellt ist. Der Innendurchmesser des Führungsrohres 4 ist nur geringfügig größer als der Außendurchmesser des Antriebskörpers 5, so daß dieser mit geringem Spiel geführt ist. Das Führungsrohr 4 ist bezüglich der Wickelwelle 2 derart versetzt angeordnet, daß die Wickelwelle 2 etwa auf der halben Länge des Führungsrohres 4 sich rechtwinklig zu dessen Längsachse erstreckt.

In Fig. 1 ist der Antriebskörper 5 an einem Ende des Führungsrohres 4 in Ausgangsstellung dargestellt. Der Antriebskörper 5 hat eine nach einer Seite hin offene Büchsenform, wobei seine offene Seite zu einer ersten Abschlußwand 6 des Führungsrohres 4 gerichtet ist und der Antriebskörper 5 in Ausgangsstellung nahe dieser Abschlußwand 6 ist oder an ihr anliegt.

Im Inneren des Antriebskörpers 5 ist ein pyrotechnischer Treibsatz 7 (Gasgenerator) als Antriebsmittel angeordnet, der mittels eines im Bodenbereich 9 des Antriebskörpers 5 angeordneten Zünders 8 ausgelöst oder gezündet werden kann. Über eine Zündleitung 10 wird das Zündsignal dem Zünder 8 zugeführt. Der pyrotechnische Treibsatz 7 kann auch außerhalb des Antriebskörpers 5, z.B. in der Abschlußwand oder im Raum zwischen Abschlußwand und Antriebskörper angeordnet sein.

Die der Wickelwelle 2 und dem Abtriebszahnrad 3 zugewandte äußere Längsseite des Antriebskörpers 5 weist gemäß dem Ausführungsbeispiel eine Verzahnung auf, deren Profil mit dem Profil des Abtriebszahnrades 3 zusammenarbeiten kann. Wird nun der pyrotechnische Treibsatz 7 gezündet, so expandiert das erzeugte Gas des Treibsatzes 7 des Gasgenerators auf der offenen Seite des Antriebskörpers 5 und beschleunigt somit den Antriebskörper 5 geschoßartig in axialer Längsrichtung entlang dem Führungsrohr 4 und von diesem geführt gegen das zweite Ende des Führungsrohres 4. Bei dieser Längsbewegung kommt die Verzahnung des Antriebskörpers 5 mit dem Abtriebszahnrad 3 in Eingriff. Das Zustandekommen des Eingriffs wird durch einen Zentrierkonus 11 am äußeren Bodenbereich des Antriebskörpers 5 im Einlauf der Verzahnung erleichtert und synchronisiert.

Somit wird die Längsbewegung des Antriebskörpers 5 über den Kontakt der beiden Verzahnungen in eine Drehbewegung des Abtriebszahnrades 3 und der Wickelwelle 2 des Gurtaufrollautomaten umgesetzt. Durch entsprechende Auswahl der bestimmenden Abmessungen (Länge des Antriebskörpers 5 und seiner Verzahnung, Durchmesser des Abtriebszahnrades 3) ist die Anzahl der Umdrehungen der Wickelwelle 2 bedarfsgerecht einstellbar. Um beliebige Unter-/Übersetzungsverhältnisse zu schaffen, kann zwischen Wickelwelle 2 und Abtriebszahnrad 3 ein Getriebe angeordnet sein.

In einer Abwandlung dieses Ausführungsbeispiels können kraft- und bewegungsübertragende Oberflächen ohne Verzahnungsprofil vorgesehen sein. In diesem Fall ist auf der Wickelwelle 2 beispielsweise eine Scheibe (statt des Abtriebszahnrades 3) angeordnet, die nach Zünden des Treibsatzes 7 beim Vorbeibewegen des Antriebskörpers 5 über ihre abrollende Umfangsfläche mit der verzahnungsfreien Seitenfläche des Antriebskörpers 5 in kraft- und bewegungsübertragendem Kontakt ist. Dadurch erfolgt eine reibschlüssige Kraftübertragung im Gegensatz zur formschlüssigen Kraftübertragung mittels Verzahnung. Zum Verbessern der Kraftübertragung können die beiderseitigen Kontaktflächen einen rauhen Reibungsbelag aufweisen.

Das Führungsrohr 4 und der Antriebskörper 5, insbesondere der Innenquerschnitt des Führungsrohres 4 und der Außenquerschnitt des Antriebskörpers 5, können im zu ihrer Längsrichtung senkrechten Querschnitt rotationssymmetrisch runde Form oder auch Rechteckform (Quadrat, Vieleck) aufweisen. Während die Rechteckform (Quadrat, Vieleck) eine Verdrehung des Antriebskörpers um seine Längsachse verhindert, muß bei runder Form sichergestellt sein, daß sich die entsprechenden Kontaktflächen der Wickelwelle 2 und des Antriebskörpers 5 bei dessen Vorbeibewegung gegenüberstehen bzw. berühren. Daher ist, falls der runde Antriebskörper 5 nur an einem Teilbereich seiner Oberfläche über eine ensprechende Kontaktfläche verfügt (sei es als Verzahnung oder als rauhe Oberfläche), eine Führung gegen ein Verdrehen vorgesehen, beispielsweise in Form von Führungsschienen und Führungsnuten in dem Führungsrohr 4 bzw. dem Antriebskörper 5.

Das Führungsrohr 4 hat an seinem zweiten Ende in einer Abschlußwand 12, auf die sich der Antriebskörper 5 hin bewegt, eine Öffnung 13, wodurch der durch die Bewegung des Antriebskörpers 5 erzeugte Überdruck ausgleichbar ist und die komprimierte Luft ausströmen kann. Mittels des Durchmessers dieser Öffnung kann das Ausströmvolumen und somit das dynamische Verhalten des Antriebskörpers 5 gesteuert werden (Ventilfunktion).

Die Zündleitung 10 wird durch die Öffnung 13 aus dem Führungsrohr 4 herausgeführt. Sie kann jedoch auch mittels einer Steckverbindung im Führungsgehäuse 1 angeschlossen sein, von dem aus eine Verbindung zu einem die Zündung auslösenden Trägheitssensor besteht.

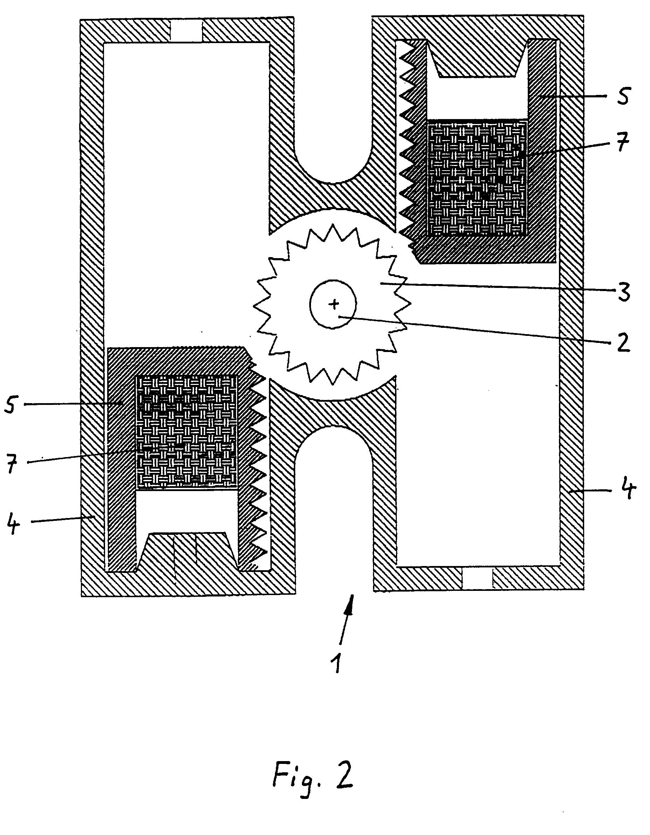

In Fig. 2 ist ein Ausführungsbeispiel dargestellt, bei dem das Führungsgehäuse 1 zwei parallele spiegelbildlich angeordnete Führungsrohre 4 aufweist, in denen sich die ebenfalls als Kolben ausgebildeten Antriebskörper 5 gegeneinander bewegen. Die Achse der Wickelwelle 2 ist senkrecht und mittig zu den beiden Führungsrohren 4 angeordnet. Diese Anordnung ergibt eine vorteilhaft kompakte Bauweise.

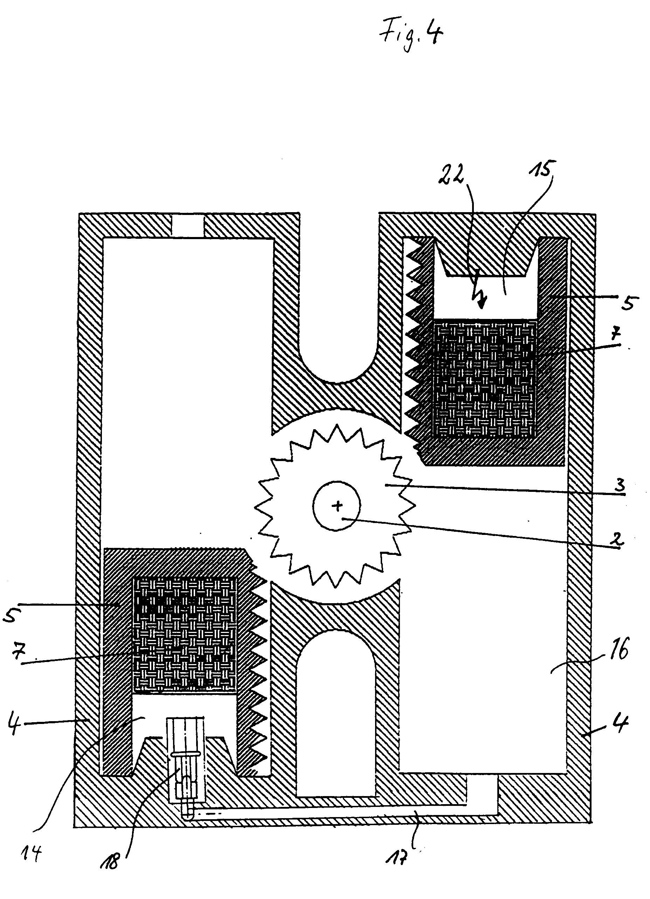

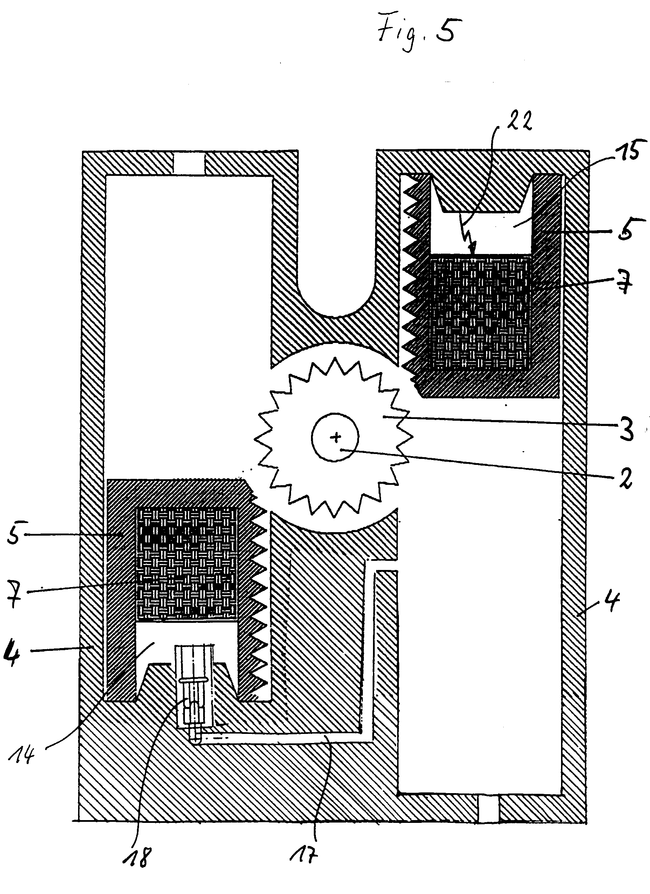

Die Zündungen erfolgen zeitlich versetzt als Reihenzündung. Durch entsprechende Wahl des Zeitverzuges kann daher die dem Abtriebszahnrad 3 aufgeprägte Drehbewegung verstärkt oder verlängert werden. Ausführungsbeispiele hierfür sind in den Figuren 4 und 5 dargestellt.

Bei den in den Figuren 4 und 5 dargestellten Ausführungsbeispielen befinden sich die beiden als Kolben ausgebildeten Antriebskörper 5 in ihren Ausgangspositionen. Um auf die Wickelwelle 2 eine Strammbewegung zu übertragen, wird zunächst durch eine erste Zündung 22 der Treibladung 7, welche im Kolben vorgesehen sein kann oder auch in einem Druckraum 15 angeordnet sein kann, zunächst der Antriebskörper 5 aus seiner oberen Ausgangsstellung in eine untere Position angetrieben, wobei über das Zahnrad 3 die Wickelwelle 2 mitgedreht wird. Beim Ausführungsbeispiel der Fig. 4 wird in einem Verdichtungsraum 16 ein Druck aufgebaut, der über einen Zünddruckkanal 17 auf die druckempfindliche Zündeinrichtung 18 zur Zündung der zweiten Treibladung 7 wirkt. Die zweite Treibladung 7 kann in einem Druckraum 14 vorgesehen sein oder auch im Antriebskörper 5. Die Kolbenbewegungen sind so aufeinander abgestimmt, daß dann, wenn der erste Kolben 5 mit seinem Zahnstangeneingriff sich vollständig am Zahnrad 3 vorbeibewegt hat, der zweite Kolben 5 zur nachfolgenden Strammbewegung angetrieben wird. Durch den Zahnstangeneingriff wird die lineare Antriebsbewegung der beiden Antriebskörper 5 in eine Drehantriebsbewegung für die Wickelwelle 2 umgewandelt.

Während beim Ausführungsbeispiel der Fig. 4 durch Aufbau eines Zünddruckes im Verdichtungsraum 16 die Zündeinrichtung 1 zur Zündung gebracht wird, erfolgt beim Ausführungsbeispiel der Fig. 5 die Zündung durch den im expandierten Druckraum 15 erzeugten Treibgasdruck über den Zünddruckkanal 17. Der Treibgasdruck wirkt sich dann aus, wenn, wie schon erläutert, der erste Antriebskörper 5 sich in seiner unteren Position befindet, so daß in zeitlicher Aufeinanderfolge die beiden Antriebskörper 5 auch beim Ausführungsbeispiel der Fig. 5 für den Drehantrieb der Wickelwelle 2 bewegt werden. Am Ende des Antriebskörpers 5 in der Fig. 5 kann ein Mittel zum Öffnen des zunächst geschlossenen Zünddruckkanals 17 vorgesehen sein.

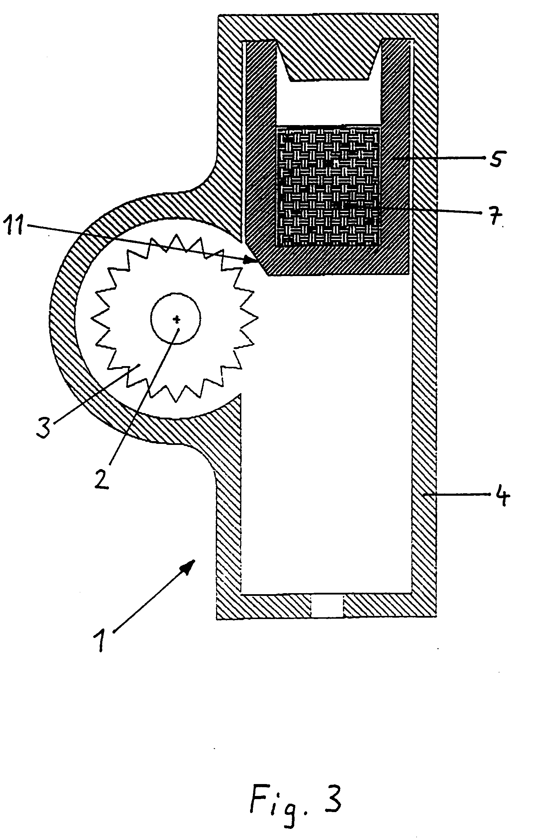

In Fig. 3 ist ein Ausführungsbeispiel gezeigt, bei dem nur eines der Führungsrohre dargestellt ist und bei dem der Antriebskörper 5 eine mit dem Abtriebszahnrad 3 zusammenwirkende verzahnungsfreie Fläche aufweist. Das Material der Wandung des Antriebskörpers 5 hat eine derart angepaßte Festigkeit und Zähigkeit, daß das Abtriebszahnrad 3 sein kraft- und bewegungsübertragendes Gegenprofil in der Oberfläche bzw. Wandung des Antriebskörpers 5 bei dessen Vorbeibewegung selbst erzeugt oder schneidet (selbstschneidendes Abtriebszahnrad). Auch hier ist ein Zentrierkonus 11 zum Einlaufen des selbstschneidenden Abtriebszahnrades 3 sowie eine zusätzliche Zwangsführung für den Schneidvorgang vorhanden. Ein Antriebskörper mit einer derartigen Wand zum Selbstschneiden ist, da ohne Verzahnungsprofil, preisgünstiger herstellbar.

Die Führungsrohre 4 können aus der Parallelen zueinander geneigt sein. Wenn sie in Richtung der Längsachse der Wickelwelle 2 gegeneinander verschoben sind, so können die Führungsrohre 4 (zwei oder mehrere) in einem beliebigen Winkel zueinander stehen, d.h. auch parallel übereinander bei Betrachtung in Richtung der Längsachse der Wickelwelle 2. Ansonsten gelten die Anmerkungen zur Ausführungsform der Fig. 1 auch für das in Fig. 2 dargestellte Ausführungsbeispiel.

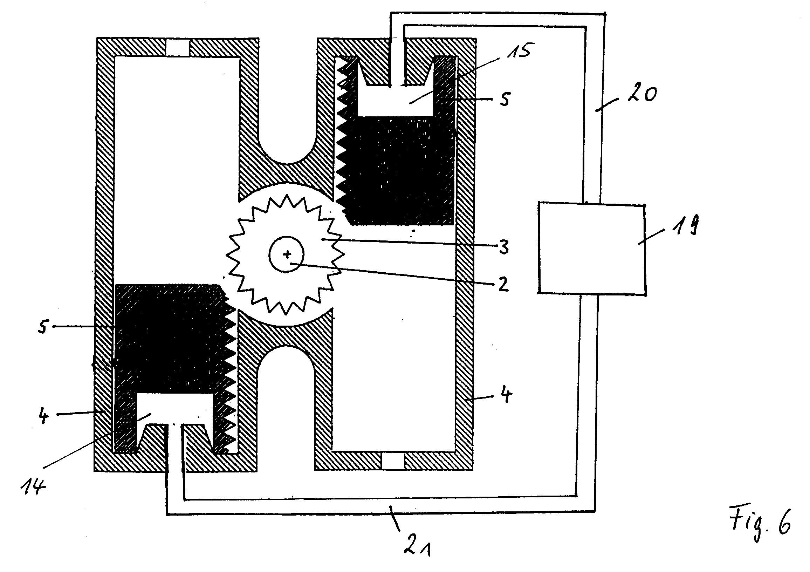

In der Fig. 6 ist ein Ausführungsbeispiel dargstellt, bei dem eine gemeinsame Gasgeneratoreinrichtung 19 für die beiden Antriebe in den Führungsrohren 4 vorgesehen ist. Die gemeinsame Gasgeneratoreinrichtung 19 ist mit dem expandierbaren Druckraum 15 über eine Druckleitung 20 und mit dem expandierbaren Druckraum 14 über eine Druckleitung 21 verbunden. Über diese Druckleitungen 20 und 21 werden die Treibgase für den Antrieb der Antriebskörper 5 zugeführt. Die beiden Antriebskörper 5 werden in zeitlicher Aufeinanderfolge angetrieben, wobei der Antrieb des zweiten Antriebskörpers 5 (im linken Führungsrohr) dann erfolgt, wenn der erste Antriebskörper 5 (im rechten Führungsrohr) sich am Abtriebsrad 3 vorbeibewegt hat. Die zeitliche Aufeinanderfolge kann mit den gleichen Mitteln gesteuert werden, wie sie in den Figuren 4 und 5 dargestellt ist. Es kann jedoch in der Gasgeneratoreinrichtung 19 auch eine Zeitgebereinrichtung vorgesehen sein, welche die Zündung des zweiten Treibgases, welches über die Druckleitung 21 in den Druckraum 14 zugeführt wird, verzögert dann zur Zündung bringt, wenn der erste Kolben sich am Abtriebsrad 3 vorbeibewegt hat. Ferner ist es möglich, die Endstellung des ersten Kolbens nach dem Vorbeibewegen am Abtriebsrad 3 mechanisch, elektrisch, magnetisch zu erfassen und einen entsprechendes Zündsignal für den zweiten Treibsatz auszulösen.

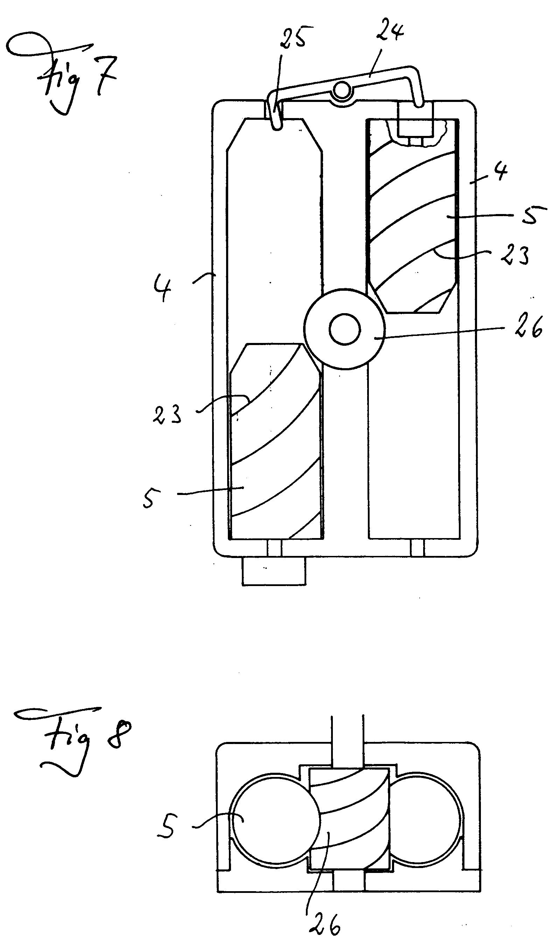

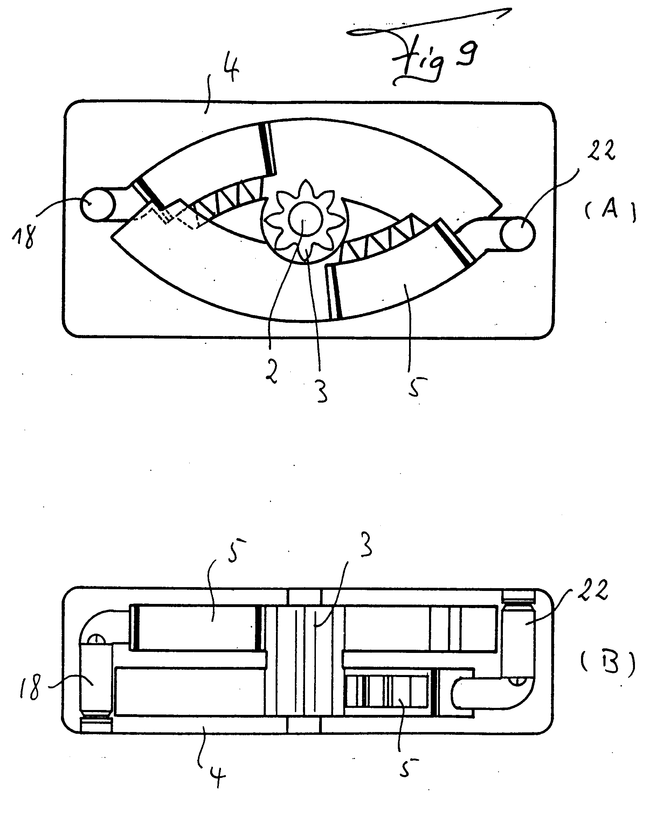

In den Figuren 7 und 8 ist ein weiteres Ausführungsbeispiel dargestellt. Bei diesem Ausführungsbeispiel besitzt der jeweilige Kolben 5 eine schraubenförmige Profilierung 23. Der Kolben 5 und das Abtriebsrad, welches als Schnecke 26 ausgebildet ist, bilden ein Schraubgetriebe mit sich kreuzenden Achsen. Beim Antrieb des Kolbens 5 führt dieser eine Drehung aus, wobei diese Drehung durch Eingriff der Profilierung 23 in entsprechend geformte Züge der Rohrinnenwand bewirkt werden kann. Ferner greift die Profilierung 23 in das als Schnecke 26 ausgebildete Abtriebsrad ein.

Wenn der zuerst angetriebene Antriebskörper 5 sich am Abtriebsrad (Schnecke 26) vorbeibewegt hat und seine Endstellung erreicht, wird eine Wippe 24 betätigt, welche eine mechanische Zündeinrichtung (Schlagbolzen 25) zur Zündung des Antriebs des zweiten Antriebskörpers 5 im linken Führungsrohr 4 betätigt.

Bei dem in der Fig. 9 dargestellten Ausführungsbeispiel sind die beiden Führungsrohre 4 sichelförmig gekrümmt. Die beiden Führungsrohre 4 sind mit ihren Enden in axialer Richtung der Wickelwelle 2 bzw. des Abtriebrades 3 versetzt zueinander angeordnet. Entsprechend gekrümmte kolbenförmige Antriebskörper 5 sind mit einer Verzahnung versehen, die mit der Verzahnung des Abtriebsrades 3 in Eingriff kommt. Auch bei diesem Ausführungsbeispiel kann zunächst durch die erste Zündung 22 der eine Antriebskolben im Rohr 4 bewegt werden und nach Erreichen der Endstellung der zweite Antriebskörper 5 durch Betätigen der zweiten Zündeinrichtung 18 angetrieben werden. Das Auslösen der zweiten Zündung 18 kann so erfolgen, wie es in den Figuren 4 und 5 erläutert ist. Es ist jedoch auch möglich, anstelle der druckempfindlichen Zündung eine mechanisch betätigte Zündung, wie es in Fig. 7 erläutert ist, zu verwenden.

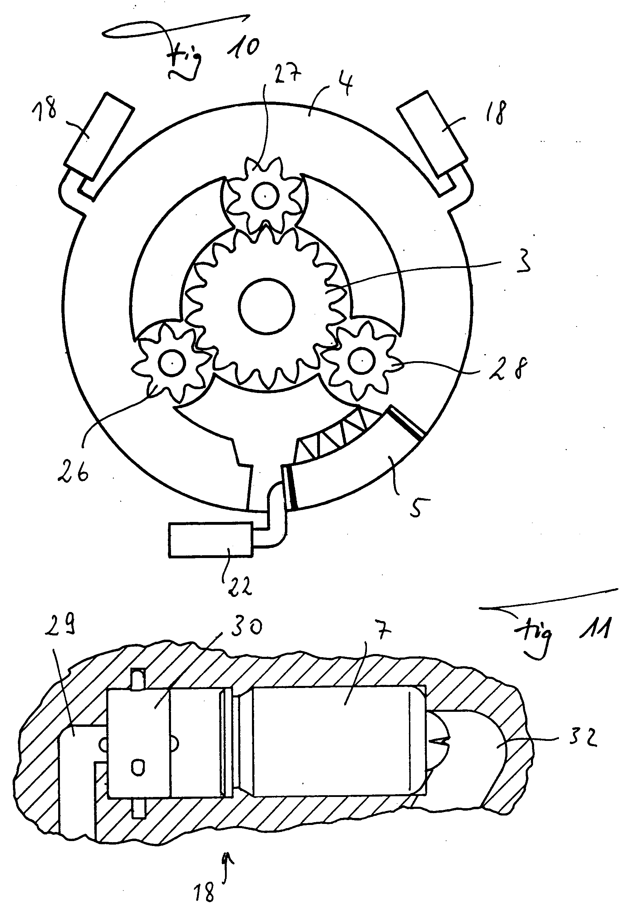

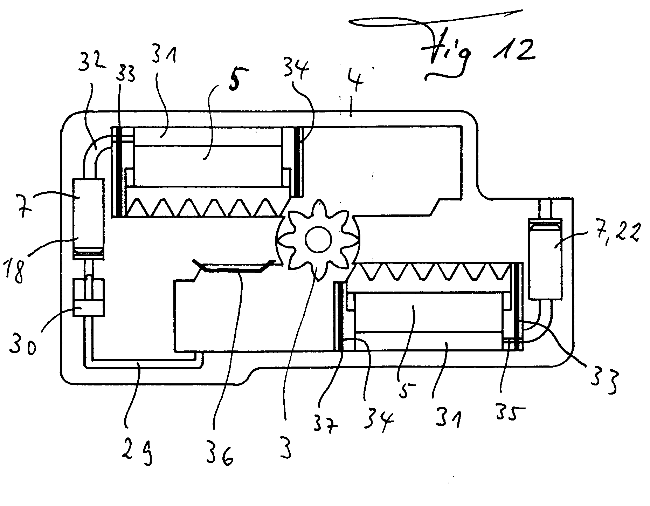

Beim Ausführungsbeispiel der Fig. 10 ist das Führungsrohr kreisförmig gebogen. Der entsprechend geformte Antriebskörper überträgt seine Bewegung entlang der vom Rohr 4 vorgegebenen Kreisbahn über ortsfest angeordnete Planetenräder 26, 27, 28, welche als Zahnräder ausgebildet sein können, auf das ebenfalls als Zahnrad ausgebildete Abtriebsrad 3, das in Antriebsverbindung mit der Wickelwelle 2 steht. Der Kolben 5 wird durch die erste Zündung 22 einer Treibladung zumindest so weit angetrieben, daß er sich auf der gesamten Kreisbahn des kreisförmigen Führungsrohres 4 bis in seine Endstellung bewegt. Bevorzugt kommen jedoch entlang der kreisförmigen Bewegungsbahn des Kolbens zusätzliche Treibladungen zur Zündung. Hierfür sind entlang der Bewegungsstrecke des Kolbens 5 druckempfindliche Zündeinrichtungen 18 mit integrierten Gasgeneratoren, von denen ein Ausführungsbeispiel in Fig. 11 dargestellt ist, angeordnet. Insbesondere wird als Zünddruck ausgenützt der Treibgasdruck, welcher auf den Kolben 5 zur Erzeugung seiner Antriebsbewegung wirkt.

Wenn der Kolben 5 sich auf seiner Kreisbahn an der ersten Zündeinrichtung 18 vorbeibewegt, wird ein Zünddruckkanal 29 geöffnet. Der auf den Kolben 5 wirkende Treibgasdruck wirkt auf einen Schlagzünder 30, der einen Treibsatz 7 des Treibgasgenerators zur Zündung bringt. Der Druck der Treibgase wirkt durch einen Treibgaskanal 32 auf die Rückseite des vorbeibewegten Kolbens 5 und treibt diesen weiter auf der kreisförmigen Bahn des Führungsrohres 4 an.

In bevorzugter Weise ist in Bewegungsrichtung des Kolbens 5 der Treibgaskanal 32 vor dem Zünddruckkanal 29 angeordnet. Damit ist sichergestellt, daß das gezündete Treibgas 7 auf die Rückseite des Kolbens 5 wirkt.

Bei dem in der Figur 12 dargestellten Ausführungsbeispiel ist in einem Druckraum 31 ein Druckmedium vorgesehen, durch das der Antriebskörper 5 sicher in Antriebsverbindung mit dem Antriebsrad 3 gehalten wird. Der Druckraum 3 für das Druckmedium erstreckt sich beim dargestellten Ausführungsbeispiel entlang der gesamten Länge des Antriebskörpers 5. An den beiden Enden ist der Druckraum 31 durch Dichtungen 33 und 34 abgedichtet. Diese Dichtungen können über den gesamten Innenquerschnitt des Führungsrohres wirken, in welchem der Antriebskörper 5 bei seiner Antriebsbewegung bewegt wird. Bevorzugt ist das Druckmedium ein Druckgas, das von einem Gasgenerator erzeugt wird. Beim dargestellten Ausführungsbeispiel wird der Druck 31 im Druckraum erzeugt von dem pyrotechnischen Antriebsmittel 7 (Gasgenerator) für den Antriebskörper 5. Das Treibgas, welches durch Zündung 22 vom Gasgenerator erzeugt wird, dient sowohl zum Antrieb des Antriebskörpers 5 als auch zur Erzeugung des Druckes im Druckraum 31. Hierzu ist im Antriebskörper 5 ein Druckkanal 35 vorgesehen, welcher das vom Gasgenerator erzeugte Druckgas in den Druckraum 31 leitet.

Der durch das pyrotechnische Antriebsmittel 7 bewegte Antriebskörper 5 kommt mit einer Feder 36 in Eingriff. Die Feder 36 wirkt so, daß der Antriebskörper 5 außer Antriebsverbindung mit dem Antriebsrad 3 gebracht wird. Hierdurch wird gewährleistet, daß dann, wenn der Druck im Druckraum 31 abgebaut ist, der Antriebskörper 5 entweder in seiner Endstellung oder auch in einer Zwischenstellung sicher außer Eingriff bzw. außer Antriebsverbindung mit dem Antriebsrad 3 und der Wickelwelle 2 gebracht wird. Dadurch wird gewährleistet, daß nach vollständigem oder auch unvollständigem Antrieb des Antriebskörpers 5 die Wikkelwelle frei vom Antriebskörper 5 bewegt werden kann.

Der Druckraum 31 und/oder die Feder 36 können auch bei den vorher beschriebenen Ausführungsbeispielen zum Einsatz kommen.

Bei dem in der Figur 12 dargestellten Ausführungsbeispiel ist ein zweites Führungsrohr 4 mit darin antreibbarem Antriebskörper 5 vorgesehen. Als Antriebsmittel dient die zweite Antriebseinrichtung 18, welche eine druckempfindliche Zündeinrichtung und einen Gasgenerator zur Erzeugung des Antriebsgases aufweist, wie das im Zusammenhang mit den Ausführungsbeispielen der Figuren 4 und 5 beschrieben ist. Die Zündung kann dadurch erfolgen, daß mit Hilfe eines am Kolben 5 vorgesehenen Öffnungsmittels 37 ein Verschluß 38 des Zündkanals 29 geöffnet wird. Hierdurch kann dann der im Druckraum 31 wirkende Arbeitsdruck des Antriebsmittels 7 auf den druckempfindlichen Schlagzünder 30 wirken und das pyrotechnische Antriebsmittel 7 zünden. Da längs dem Antriebskörper 5 ebenfalls ein Druckraum 31 vorgesehen ist, wird ebenfalls ein sicherer Eingriff in das Antriebsrad 3 gewährleistet. Der Antriebskörper 5 kann in seiner Endstellung soweit vom Antriebsrad 3 entfernt sein, daß er außer Eingriff mit dem Antriebsrad kommt. Es kann jedoch zusätzlich eine Feder 36 vorgesehen sein, welche den zweiten Antriebskörper 5 auch in einer Zwischenstellung sicher außer Eingriff mit dem Antriebsrad 3 bringt.

## Patentansprüche

1. Vorrichtung zum pyrotechnischen Drehantrieb einer Wickelwelle eines Sicherheitsgurtaufrollautomaten eines Fahrzeuges um die Wickelwellenachse in Aufwickelrichtung eines Sicherheitsgurtes auf die Wickelwelle, wobei die Vorrichtung wenigstens einen in einem Führungsgehäuse (1) angeordneten Antriebskörper (5) mit einem Antriebsmittel (7) und wenigstens eine Zündeinrichtung aufweist und der Antriebskörper (5) bei ausgelöstem Antriebsmittel (7) mit der Wickelwelle (2) in Drehantriebsverbindung kommt,
dadurch **gekennzeichnet**, daß
das Führungsgehäuse (1) zwei oder mehrere Führungsrohre (4), deren Längsachsen rechtwinklig zur Wickelwellenachse angeordnet sind und in denen jeweils ein Antriebskörper (5) mit zugeordnetem Antriebsmittel (7) geführt ist, aufweist und daß die jeweiligen Antriebsmittel (7) für die Antriebskörper (5) zeitlich versetzt auslösbar sind.

2. Vorrichtung nach Anspruch 1, dadurch gekennzeichnet, daß der Antriebskörper (5) bei ausgelöstem Antriebsmittel (7) mit einem eine Drehbewegung auf die Wickelwelle (2) aufbringenden Abtriebsrad (3; 26) in bewegungsübertragendem Kontakt ist.

3. Vorrichtung nach Anspruch 1 oder 2, dadurch gekennzeichnet, daß das Führungsgehäuse (1) zwei parallele Führungsrohre (4) aufweist, zwischen denen die Wickelwellenachse angeordnet ist.

4. Vorrichtung nach einem der Ansprüche 1 bis 3, dadurch gekennzeichnet, daß das jeweilige Führungsrohr (4) eine gebogene Form oder Kreisform aufweist.

5. Vorrichtung nach einem der Ansprüche 1 bis 4, dadurch gekennzeichnet, daß die Antriebskörper (5) in den Führungsrohren (4) derart angeordnet sind, daß sie bei ihrer Auslösung mit der Wikkelwelle (2) in gleichsinnig drehbewegungsübertragendem Kontakt sind.

6. Vorrichtung nach Anspruch 2, dadurch gekennzeichnet, daß das Abtriebsrad (3) als Zahnrad ausgebildet ist.

7. Vorrichtung nach einem der Ansprüche 2 bis 6, dadurch gekennzeichnet, daß das Abtriebsrad (3; 26) bei ausgelöstem Antriebskörper (5) in einem das Gegenprofil selbstschneidenden Eingriff mit der Wandung des Antriebskörpers (5) ist.

8. Vorrichtung nach einem der Ansprüche 2 bis 7, dadurch gekennzeichnet, daß der Antriebskörper (5) eine beim Auslösen mit dem als Zahnrad ausgebildeten Abtriebsrad (3; 26) ineinandergreifende Außenverzahnung aufweist.

9. Vorrichtung nach einem der Ansprüche 2 bis 8, dadurch gekennzeichnet, daß der Antriebskörper (5) einen Einlauf- oder Zentrierkonus (11) an seiner dem Abtriebsrad (3; 26) zugewandten Seite aufweist.

10. Vorrichtung nach einem der Ansprüche 2 bis 9, dadurch gekennzeichnet, daß das Abtriebsrad (3; 26) direkt mit der Wickelwelle (2) verbunden ist.

11. Vorrichtung nach einem der Ansprüche 2 bis 10, dadurch gekennzeichnet, daß das Abtriebsrad (3; 26) über ein Getriebe oder eine andere Kupplung mit der Wickelwelle (2) verbunden ist.

12. Vorrichtung nach einem der Ansprüche 1 bis 11, dadurch gekennzeichnet, daß das Antriebsmittel (7) ein pyrotechnisch erzeugtes Druckgas ist.

13. Vorrichtung nach einem der Ansprüche 1 bis 12, dadurch gekennzeichnet, daß der Antriebskörper (5) ein büchsenförmiges Gasgeneratorgehäuse und in seinem Boden einen Zünder (8) aufweist, der mit einer im Führungsgehäuse (1) über eine Steckverbindung angeschlossenen Zündleitung (10) verbunden ist.

14. Vorrichtung nach einem der Ansprüche 1 bis 13, dadurch gekennzeichnet, daß das Führungsrohr (4) und der Antriebskörper (5) im zu ihrer Längsachse senkrechten Querschnitt rotationssymmetrisch rund sind.

15. Vorrichtung nach einem der Ansprüche 1 bis 14, dadurch gekennzeichnet, daß das Führungsrohr (4) und der Antriebskörper (5) im zu ihrer Längsachse senkrechten Querschnitt quadratisch, rechteckig oder vieleckig sind.

16. Vorrichtung nach einem der Ansprüche 1 bis 15, dadurch gekennzeichnet, daß das Führungsrohr (4) in der Abschlußwand (12) seines zweiten Endes eine Öffnung (13) mit einstellbarem Durchmesser aufweist.

17. Vorrichtung nach einem der Ansprüche 1 bis 16, dadurch gekennzeichnet, daß der jeweilige Antriebskörper (5) am Ende seiner Antriebsbewegung außer Antriebsverbindung mit der Wickelwelle ist.

18. Vorrichtung nach einem der Ansprüche 1 bis 5 und 9 bis 17, dadurch gekennzeichnet, daß das Abtriebsrad (26) als Schneckenrad ausgebildet ist.

19. Vorrichtung nach einem der Ansprüche 1 bis 18, dadurch gekennzeichnet, daß die Zündeinrichtungen zur zeitlich aufeinander folgenden Zündung der jeweiligen Antriebsmittel (7) für die mehreren Antriebskörper (5) durch Druck zündbar sind.

20. Vorrichtung nach einem der Ansprüche 1 bis 19, dadurch gekennzeichnet, daß in einem Druckraum (31) ein Druckmedium vorgesehen ist, das an der zur Antriebsverbindung entgegengesetzten Seite des Antriebskörpers (5) liegt und der Antriebskörper (5) durch das Druckmedium in die Antriebsverbindung mit der Wickelwelle (2) gedrückt ist.

21. Vorrichtung nach Anspruch 20, dadurch gekennzeichnet, daß das Druckmedium durch das den Antriebskörper (5) antreibende pyrotechnische Antriebsmittel (7) gebildet ist.

22. Vorrichtung nach einem der Ansprüche 1 bis 21, dadurch gekennzeichnet, daß mit den durch das Antriebsmittel (7) bewegten Antriebskörper (5) eine Feder (36) in Eingriff bringbar ist, welche den Antriebskörper (5) außer Antriebsverbindung mit der Wickelwelle (2) bringt.

## Claims

1. A device for the pyrotechnic rotary drive of a winding shaft of an automatic safetybelt retractor of a vehicle about the winding shaft axis in the direction of winding a safetybelt onto the winding shaft, wherein the device has at least one drive body (5) arranged in a guide housing (1) and having a drive means (7), and at least one firing device, and the drive body (5) is rotatably drivingly connected to the winding shaft (2) when the drive means (7) is triggered, characterised in that the guide housing (1) has two or more guide tubes (4) whose longitudinal axes are arranged at a right angle to the winding shaft axis and in each of which is guided a respective drive body (5) with associated drive means (7), and that the respective drive means (7) for the drive bodies (5) can be triggered in time-staggered manner.

2. A device according to claim 1 characterised in that when the drive means (7) is triggered the drive body (5) is in motion-transmitting contact with a driven wheel (3; 26) for applying a rotary movement to the winding shaft (2).

3. A device according to claim 1 or claim 2 characterised in that the guide housing (1) has two parallel guide tubes (4), between which the winding shaft axis is arranged.

4. A device according to one of claims 1 to 3 characterised in that the respective guide tube (4) is of a curved shape or a circular shape.

5. A device according to one of claims 1 to 4 characterised in that the drive bodies (5) are arranged in the guide tubes (4) in such a way that upon triggering thereof they are in contact with the winding shaft (2) for transmitting rotary motion in the same direction.

6. A device according to claim 2 characterised in that the driven wheel (3) is in the form of a gear.

7. A device according to one of claims 2 to 6 characterised in that when the drive body (5) is triggered the driven wheel (3; 26) is in engagement with the wall of the drive body (5), such engagement being self-cutting for the co-operating profile.

8. A device according to one of claims 2 to 7 characterised in that the drive body has an external tooth configuration which upon triggering comes into engagement with the driven wheel (3; 26) which is in the form of a gear.

9. A device according to one of claims 2 to 8 characterised in that the drive body (5) has an entry or centering cone (11) at its side towards the driven wheel (3; 26).

10. A device according to one of claims 2 to 9 characterised in that the driven wheel (3; 26) is connected directly to the winding shaft (2).

11. A device according to one of claims 2 to 10 characterised in that the driven wheel (3; 26) is connected to the winding shaft (2) by way of a transmission or another coupling means.

12. A device according to one of claims 1 to 11 characterised in that the drive means (7) is a pyrotechnically produced pressure gas.

13. A device according to one of claims 1 to 12 characterised in that the drive body (5) has a sleeve-shaped gas generator housing and in its bottom a firing fuse (8) which is connected to a firing line (10) connected in the guide housing (1) by way of a plug connection.

14. A device according to one of claims 1 to 13 characterised in that the guide tube (4) and the drive body (5) are rotationally symmetrically round in cross-section which is perpendicular to their longitudinal axis.

15. A device according to one of claims 1 to 14 characterised in that the guide tube (4) and the drive body (5) are square, rectangular or polygonal in cross-section perpendicular to their longitudinal axis.

16. A device according to one of claims 1 to 15 characterised in that the guide tube (4) has an opening (13) of adjustable diameter in the closure wall (12) of its second end.

17. A device according to one of claims 1 to 16 characterised in that the respective drive body (5) is out of a condition of driving connection to the winding shaft, at the end of its drive movement.

18. A device according to one of claims 1 to 5 and 9 to 17 characterised in that the driven wheel (26) is in the form of a worm gear.

19. A device according to one of claims 1 to 18 characterised in that the firing devices for successive firing in respect of time of the respective drive means (7) for the plurality of drive bodies (5) can be fired by pressure.

20. A device according to one of claims 1 to 19 characterised in that provided in a pressure chamber (31) is a pressure medium which is against the side of the drive body (5), which is opposite to the drive connection, and the drive body (5) is urged into the condition of driving connection with the winding shaft (2) by the pressure medium.

21. A device according to claim 20 characterised in that the pressure medium is formed by the pyrotechnic drive means (7) which drives the drive body (5).

22. A device according to one of claims 1 to 21 characterised in that a spring (36) can be brought into engagement with the drive body (5) moved by the drive means (7), the spring bringing the drive body (5) out of a condition of driving connection with the winding shaft (2).

## Revendications

1. Dispositif d'entraînement pyrotechnique en rotation d'un cylindre d'enroulement d'un enrouleur automatique de ceinture de sécurité d'un véhicule autour de l'axe du cylindre d'enroulement dans le sens d'enroulement d'une ceinture de sécurité sur le cylindre d'enroulement, le dispositif comprenant au moins un corps d'entraînement (5) logé dans un boîtier de guidage (1), avec un moyen de commande (7), et au moins un dispositif de mise à feu, et, le moyen de commande (7) déclenché, le corps d'entraînement (5) étant amené en liaison d'entraînement en rotation avec le cylindre d'enroulement (2), **caractérisé en ce** que le boîtier de guidage (1) comprend deux tubes de guidage (4) ou plus dont les axes longitudinaux sont orientés orthogonalement à l'axe du cylindre d'enroulement et dans lesquels est guidé à chaque fois un corps d'entraînement (5) avec le moyen de commande (7) associé, et que les moyens de commande (7) respectifs pour les corps d'entraînement (5) peuvent être déclenchés avec un décalage dans le temps.

2. Dispositif selon la revendication 1, caractérisé en ce que, le moyen de commande (7) étant déclenché, le corps d'entraînement (5) est en contact de transmission de mouvement avec une roue de sortie (3 ; 26) qui imprime le mouvement de rotation au cylindre d'enroulement (2).

3. Dispositif selon la revendication 1 ou 2, caractérisé en ce que le boîtier de guidage (1) comprend deux tubes de guidage (4) parallèles entre lesquels est disposé l'axe du cylindre d'enroulement.

4. Dispositif selon l'une des revendications 1 à 3, caractérisé en ce que le tube de guidage (4) respectif présente une forme courbe ou circulaire.

5. Dispositif selon l'une des revendications 1 à 4, caractérisé en ce que les corps d'entraînement (5) sont disposés dans les tubes de guidage (4) de telle façon que, lors de leur déclenchement, ils sont en contact avec le cylindre d'enroulement (2) de manière à transmettre le mouvement de rotation dans le même sens.

6. Dispositif selon la revendication 2, caractérisé en ce que la roue de sortie (3) est conformée en roue dentée.

7. Dispositif selon l'une des revendications 2 à 6, caractérisé en ce que, lorsque le corps d'entraînement (5) est déclenché, la roue de sortie (3 ; 26) est en prise d'autotaraudage du profil conjugué avec la paroi du corps d'entraînement (5).

8. Dispositif selon l'une des revendications 2 à 7, caractérisé en ce que le corps d'entraînement (5) présente une denture extérieure qui s'engrène lors du déclenchement avec la roue de sortie (3 ; 26) conformée en roue dentée.

9. Dispositif selon l'une des revendications 2 à 8, caractérisé en ce que le corps d'entraînement (5) comprend un cône d'entrée ou de centrage (11) sur son côté tourné vers la roue de sortie (3 ; 26).

10. Dispositif selon l'une des revendications 2 à 9, caractérisé en ce que la roue de sortie (3 ; 26) est couplée directement avec le cylindre d'enroulement (2).

11. Dispositif selon l'une des revendications 2 à 10, caractérisé en ce que la roue de sortie (3 ; 26) est couplée avec le cylindre d'enroulement (2) par l'intermédiaire d'un engrenage ou d'un autre dispositif d'accouplement.

12. Dispositif selon l'une des revendications 1 à 11, caractérisé en ce que le moyen de commande (7) est un gaz sous pression produit de manière pyrotechnique.

13. Dispositif selon l'une des revendications 1 à 12, caractérisé en ce que le corps d'entraînement (5) comprend un carter de générateur de gaz en forme de boîte et abrite dans son fond un allumeur (8) qui est relié à un câble d'allumage (10) branché dans le boîtier de guidage (1) par l'intermédiaire d'un connecteur.

14. Dispositif selon l'une des revendications 1 à 13, caractérisé en ce que le tube de guidage (4) et le corps d'entraînement (5) présentent, perpendiculairement à leur axe longitudinal, une section transversale ronde à symétrie de révolution.

15. Dispositif selon l'une des revendications 1 à 14, caractérisé en ce que le tube de guidage (4) et le corps d'entraînement (5) présentent, perpendiculairement à leur axe longitudinal, une section transversale carrée, rectangulaire ou polygonale.

16. Dispositif selon l'une des revendications 1 à 15, caractérisé en ce que le tube de guidage (4) présente dans la paroi de fermeture (12) de sa seconde extrémité, une ouverture (13) à diamètre réglable.

17. Dispositif selon l'une des revendications 1 à 16, caractérisé en ce que, à la fin de son mouvement d'entraînement, le corps d'entraînement (5) respectif est dégagé du cylindre d'enroulement.

18. Dispositif selon l'une des revendications 1 à 5 et 9 à 17, caractérisé en ce que la roue de sortie (26) est conformée en roue à denture hélicoïdale.

19. Dispositif selon l'une des revendications 1 à 18, caractérisé en ce que les dispositifs de mise à feu pour l'allumage successif des moyens de commande (7) respectifs pour la pluralité de corps d'entraînement (5) peuvent être déclenchés par pression.

20. Dispositif selon l'une des revendications 1 à 19, caractérisé en ce que dans une chambre de compression (31) est prévu un fluide sous pression placé sur le côté du corps d'entraînement (5) opposé à la liaison d'entraînement, et que le corps d'entraînement (5) est amené par le fluide sous pression en contact d'entraînement avec le cylindre d'enroulement (2).

21. Dispositif selon la revendication 20, caractérisé en ce que le fluide sous pression est constitué par le moyen de commande pyrotechnique (7) qui entraîne le corps d'entraînement (5).

22. Dispositif selon l'une des revendications 1 à 21, caractérisé en ce que le corps d'entraînement (5) déplacé par le moyen de commande (7) peut être mis en contact avec un ressort (36) qui dégage le corps d'entraînement (5) du cylindre d'enroulement (2).
